# EUROPEAN PATENT SPECIFICATION

(11) **EP 2 745 757 B1**
(45) Date of publication and mention of the grant of the patent: **10.02.2016**
(21) Application number: 13158341.1
(22) Date of filing: 08.03.2013
(51) Int. Cl.: A47J 43/07

(54) **Ultrasound assisted mixing**
Ultraschallgestütztes Mischen
Mélange assisté par ultrasons

(30) Priority: 20.12.2012 EP 12382517; 02.01.2013 ES 201330001
(43) Date of publication of application: 25.06.2014
(73) Proprietor: BSH Hausgeräte GmbH, 81739 München (DE)
(72) Inventor: Alvarez Lanzarote, Ignacio, 50018 Zaragoza (ES); Condón Usón, Santiago, 50006 Zaragoza (ES); Mir Bel, Jorge, 50019 Zaragoza (ES); Monfort Soler, Silvia, 50059 Zaragoza (ES); Raso Pueyo, Javier, 50410 Zaragoza (ES); Rivera Peman, Julio, 50410 Cuarte de Huerva (Zaragoza) (ES)

(56) References cited:
- EP-A1- 1 886 608
- US-A- 6 165 525

## Description

### BACKGROUND OF THE INVENTION

The present invention relates to the application of ultrasound transducer or transducers in a domestic kitchen device to obtain improved efficiency of food processing according to the preamble of claim 1. Such a kitchen device is known from US 6165525.

### PRIOR ART

Domestic kitchen appliances (stick mixers, food processors, kitchen machines and others) are well established consumer products with various options for executing different mixing, kneading, chopping or similar operations including several speeds or different types of utensils.

Ultrasound (i.e., mechanical waves at a frequency above the threshold of human hearing) can be divided into three frequency ranges; high power ultrasound (16 - 100 kHz), high frequency ultrasound (100 kHz - 1 MHz) and diagnostic ultrasound (1 - 10 MHz). The basic principle of ultrasound is the formation of an acoustic pressure that acts in addition to the hydrostatic pressure in the medium. Low frequency ultrasound (that is, power ultrasound 16-100 kHz) generates large cavitation bubbles resulting in higher temperatures and pressures in the cavitation zone. As the frequency increases the cavitation zone becomes less violent and in the megahertz range no cavitation is observed anymore and the main mechanism is acoustic streaming. While medical imaging operates at frequencies in the megahertz range, most industrial applications - processing of chemicals, food as well as cleaning. Significant technical advances in recent years have made it possible for high power ultrasound to become an alternative to many conventional food processing steps ("Ultrasonic Innovations in the food industry: From the laboratory to commercial production";A. Patist, D. Bates, Innovative Food Science & Emerging Technologies; 9/2 (2008) 147-154). Here, the acoustic pressure assists the forces exerted upon the processed material by the conventional processing tools.

High power ultrasound has recently been used in various applications of the industrial scale, such as emulsification, homogenization, extraction, crystallization, dewatering, low temperature pasteurization, degassing, defoaming, activation and inactivation of enzymes, particle size reduction and viscosity alteration ("Ultrasonic Innovations in the food industry: From the laboratory to commercial production; A. Patist, D. Bates).

The use of low power ultrasound (<50 kHz has been shown to improve the process of edible mixtures and emulsions with such equipment. Due to the use of ultrasound in addition to regular utensils, the process was either sped up, improved regarding physical properties of the processed food, or both. In addition, the process is often economically more efficient and sometimes new properties of the processed food can be achieved such as improved taste, texture, flavor and color, and the reduction of pathogens at lower temperatures.

There are several applications of high power ultrasound in the industrial scale setting, some are described in the patent RU2358796 (C1), in patent applications WO 2009/056657 A1, US 2012/0073414 A1, other solutions are described in "Power ultrasound aided batter mixing for sponge cake batter". M.C. Tan, N.L. Chin , Y.A. Yusof; Journal of Food Engineering; 104 (2011) 430-437. Current industrial setting systems have an energy efficiency of around 85% which means that most of the power send to the transducer is transferred into the medium.

### OBJECT UNDERLYING THE INVENTION

The object underlying the present invention is to provide a solution that increases the effectiveness of mixing, kneading, chopping or similar processes performed with the use of domestic kitchen appliances

### SOLUTION ACCORDING TO THE INVENTION

In order to achieve the object underlying the invention, the present invention provides a motorized kitchen appliance that comprises at least one ultrasound transducer according to claim 1. The kitchen appliance comprises a motor, a clutch adapted to connect the motor to a rotating tool, a rotating tool attached to the clutch and possibly other components. The motorized kitchen appliance can either be a kitchen machine, food processor, a stick mixer, a hand mixer or the like. The ultrasound transducer or transducers can be employed in addition to the conventional food processing tools for mixing, kneading or similar processes.

### EMBODIMENTS OF THE INVENTION

Advantageous embodiments and developments which can be used individually or in combination with one another are the subject matter of the dependent claims.

The transducers can be positioned in close proximity to the compartment in which the food is processed, to maximize the effects. The power and frequency output of the transducers is 20 W or more, preferably 35 - 50 W and 16 - 100 kHz, preferably 25 - 50 kHz, even more preferably 35 kHz. This is the high power ultrasound range that can produce significant cavitation and other effects. The processing of the food can therefore be faster, require less ingredients and even generate new properties of the food, such as taste, color, flavour, etc.

According to the invention at least one transducer is positioned onto the rotating tool, either in the region closer to the clutch so as to present the lowest disturbance regarding rotational stability. Alternatively, transducers can also be mounted at the distal end of the rotating tool, e.g. near or on the blades which can also help in preventing the ingredients of the processed food from sticking to the rotating tool.

It is beneficial to position transducers as close to the processed food as possible in order to minimize the power needed for the achievement of the desired effect.

According to an embodiment, the transducers mounted on the kitchen appliance are a high power transducers in the frequency range of 16 to 100 kHz, preferably 25 to 50 kHz. This ensures that the transducers are able to produce the high-power ultrasound effects resulting in e.g. cavitation. These effects result in a modification of food processing and therefore in an ultrasound-assisted processing. Higher frequencies of ultrasound were shown to produce significantly lower powers that are transmitted to the processed food and these are not sufficient to provide the aforementioned effects.

According to an embodiment, the kitchen appliance is a kitchen machine or food processor and which has at least one ultrasound transducer disposed either within or adjacent to the bowl, on the rotating tool and/or within the housing. The transducer(s) are positioned in such way that the substantial amount of ultrasonic energy is transferred to the processed food. In order to ensure the highest possible efficiency, the transducers should be positioned as close to the processed food as possible.

In another embodiment, transducers mounted on the kitchen appliance are positioned in a substantially symmetrical configuration. This ensures that the transferred energy has a homogeneous distribution on the processed food. Non-homogeneous distribution is less favorable as it can result in lower efficiency of power transfer from transducers to the processed food, and on the other hand regions of very high power transferred resulting in undesirable processing effects (high cavitation intensities, heating).

In another embodiment, the kitchen appliance is a stick mixer or hand blender, which has at least one ultrasound transducer disposed either on the rotating tool and/or within the housing of the appliance in such way that the substantial amount of ultrasonic energy is transferred to the processed food. Again, to ensure the highest possible efficiency, the transducers should be positioned as close to the processed food as possible.

According to the invention, at least one transducer is positioned on said rotating tool, preferably in the region closer to said clutch. The advantage of such an arrangement is the close proximity of the transducer to the processed food, the possibility of the transducer to additionally function as the blade cleaning device - the processed food that sticks to the blade is partially removed due to the applied ultrasound. Positioning of the transducer in the region of the clutch is beneficial in regard to reduced vibration of the rotating tool.

According to another embodiment, the stick mixer or hand blender further comprises a detachable mixing bowl, wherein at least one transducer is positioned within or adjacent to the mixing bowl. Such positioning allows better transfer of the ultrasonic power to the processed food and can be used either in combination with the previous embodiment (transducer on the rotating tool), or as a primary source of ultrasound.

In another modification, the stick mixer or hand blender further comprises a bowl base onto which said bowl is to be mounted. This allows for at least one transducer to be positioned in close proximity the mixing bowl and ensure efficient transfer of energy to the processed food.

A further option for an embodiment is that at least one ultrasound transducer is connected to control means of the kitchen appliance and the control means are adapted to control operation of said at least one ultrasound transducer. This makes it possible to provide variants where transducers may be switched on and off or their power can be adjusted. This control mechanism can be arranged for single transducers, as well as multiple or all transducers simultaneously.

In one of the embodiments, it is also envisaged that all transducers all may have substantially the same power and frequency output. This can ensure a homogeneous ultrasound power distribution where the transducers are positioned symmetrically and can also have beneficial properties during production of the appliance and during the use of control means.

### DETAILED DESCRIPTION OF THE INVENTION

The invention is explained in more detail below on the basis of an exemplary embodiment and with reference to schematic drawings in which:
- Fig. 1:: schematically shows a kitchen device according to the invention;
- Fig. 2a:: shows a schematic presentation a four-transducer symmetrical positioning in a bowl - perspective from above;
- Fig. 2b:: depicts a schematic presentation a single-transducer positioning in a bowl - perspective from above;
- Fig. 3:: graphically depicts mixing time (s) versus relative viscosity (s) measured according to the present invention;
- Fig. 4:: graphically depicts egg reduction (%) versus relative viscosity (s) measured according to the present invention; and
- Fig. 5:: shows oil reduction (%) versus relative viscosity (s) measured according to the present invention.

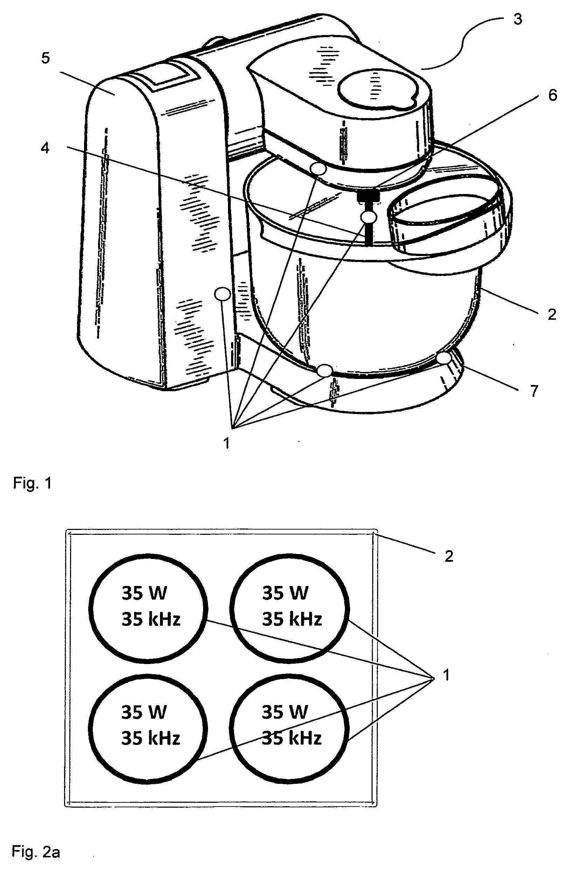

Fig 1 shows possible positioning of one or more ultrasound transducers 1 within a kitchen machine according to the present invention. Transducers can be positioned on the mixing bowl 2, rotating tool 4, preferably in the region of the clutch 6, on the housing 5 of the kitchen appliance 3, and/or on the base 7 of the bowl 2. Various combinations of positioning (including a single-transducer 1 setting) can be used to obtain optimal results. The depiction of transducer 1 positioning is not intended to exclude other possible positions. Fig. 1 shows schematically a kitchen device according to the present invention, wherein the mounting of the transducers 1 is internally implemented, that is the user will not be able to see the transducers without disassembling the kitchen appliance. Similar positions for transducers 1 are possible if the kitchen appliance 3 is a hand mixer or a hand blender (not shown).

Fig. 2a shows top perspective view of a four-transducer 1 setting within or adjacent to the mixing bowl 2, preferably in the region of the bottom of the bowl 2. For the sake of clarity the bowl 2 is only schematically shown and it shows the shape of a rectangle, but other shapes are conceivable as well.

The four transducers 1 are arranged substantially symmetrically in the base of the bowl 2 and have the same frequency and power outputs (35 kHz, 35 W). The transducers 1are positioned directly below (or within) the bowl 2 containing the ingredients to be processed.

This results in a more homogeneous transfer of ultrasound power to the processed food throughout the bowl 2.

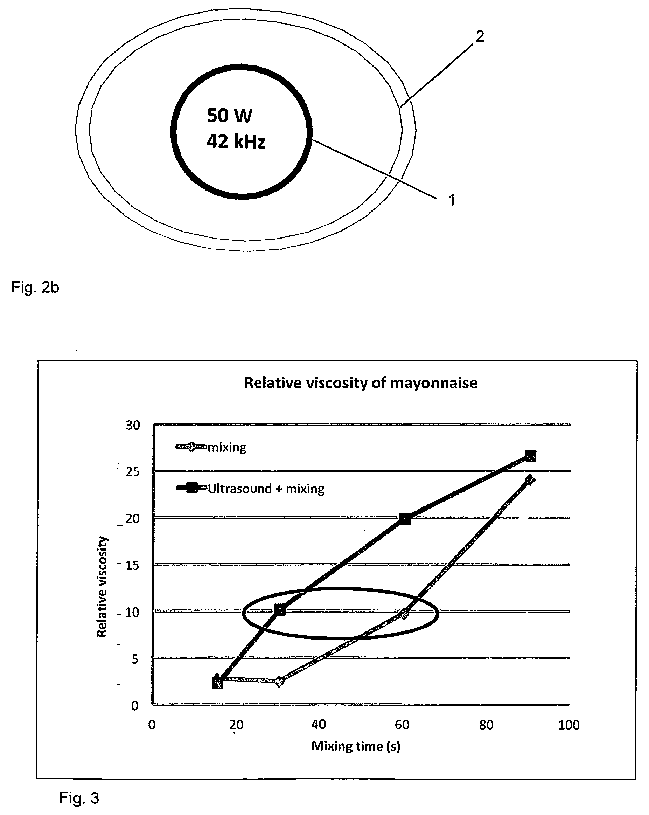

Fig 2b shows a top perspective view of a single-transducer 1 setting where a single transducer 1 is positioned in the middle of the bowl, preferably in the region of the bottom of the bowl. Also in this figure the shape is only schematically shown as an oval, but hereto also different shapes (circles etc.) may be implemented. This results in an efficient transfer of power from the ultrasound transducer 1 to the processed food.

Both settings ensure close proximity of transducers 1 to the processed food (even when larger quantities of food are processed, at least part of the food is in close proximity), which ensures sufficient transfer of energy to modify the processing. Close proximity is to be interpreted as the distance between an ultrasonic transducer 1 and the processed food that still allows for the transfer of a significant amount of energy which in turn results in the desired effects. It is, of course desirable to have as efficient a transfer of power from the transducer 1 to the processed food as possible. The power transferred to the processed food from all the transducers 1 used should preferably not be lower than 20 W. The transducers 1 can be positioned anywhere on the kitchen appliance 3, but it has to be kept in mind that with distance, the power output of the transducers 1 must be increased to achieve the same result. This in turn results in higher energy consumptions as well as other undesirable effects.

Modifications of processing by ultrasound can result in the food, such as mayonnaise, to be processed more quickly. Alternatively, they result in the reduction of the quantity of ingredients necessary to achieve the same result (for example, the same results measured as the viscosity of mayonnaise can be obtained with up to 13% less eggs used or with up to 7% less oil applied).

Fig. 3 shows the results as mentioned above for the reduced time necessary to achieve the same viscosity of mayonnaise when using conventional mixing alone as compared to conventional mixing. The time required to achieve the same viscosity is reduced by up to 50% with the use of a single ultrasound transducer 1 with the power output of 50W and the frequency of 35 kHz. The transducer 1 is positioned immediately below the processing bowl 2.

Faster time of processing results in a much lower energy consumption. In the embodiment described, the 750 W stick mixer was used for preparing mayonnaise. Since the addition of a 50 W ultrasound transducer 1 reduced the time of processing by approximately 50 %, this represents a 47 % savings in energy consumption. Basic recipe for the preparation of mayonnaise was: Mix 1 hen egg + 200 ml water + 200 ml oil

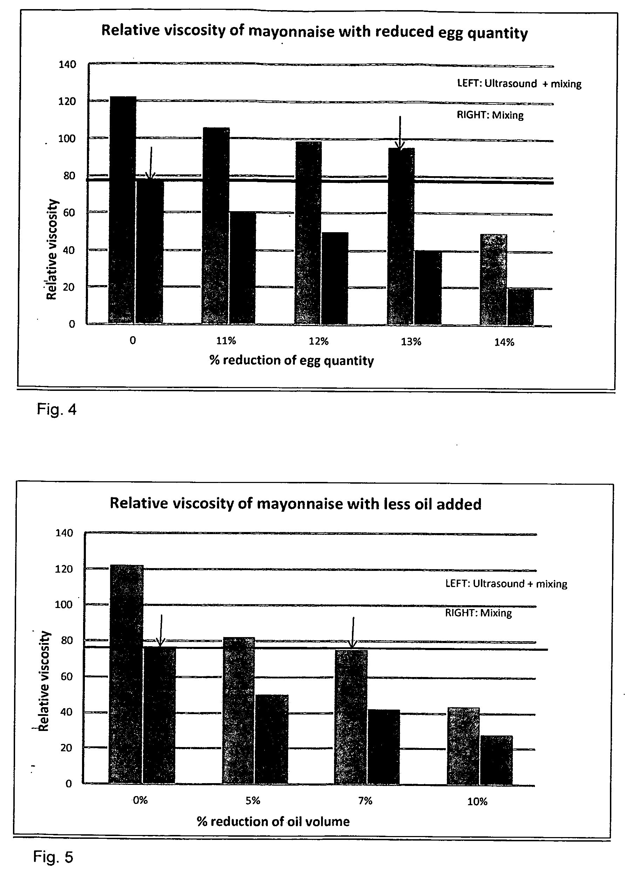

Fig. 4 shows the results as mentioned above for the reduced quantity of eggs needed to achieve the same relative viscosity in a mayonnaise. It shows, that additional use of an ultrasonic transducer (50 W, 35 kHz) yields same or better viscosity with up to 13 % less eggs used in the mixture.

Fig. 5 shows similar results when the amount of added oil is reduced. Same or better relative viscosity is achieved when adding up to 7 % less oil.

These two examples show, that apart from significant savings in energy and time, there are further savings with less ingredients necessary to obtain the same results.

## Claims

1. A motorized kitchen appliance (3), for mixing; kneading, chopping and/or similar processing of food ingredients, comprising:
- a motor,
- a clutch (6) adapted to connect the motor to a rotating tool (4), a rotating tool (4) attached to the clutch (6),
- at least one ultrasound transducer (1) adapted to transfer energy to the food ingredients
**characterized in that** said kitchen appliance (3) is a kitchen machine or food processor, wherein said at least one ultrasound transducer (1) is disposed on the rotating tool (4).

2. A kitchen appliance according to claim 1, **characterized in that** said at least one ultrasound transducer (1) is a high power transducer in the frequency range of 16 to 100 kHz, preferably 25 to 50 kHz.

3. A kitchen appliance according to any of the preceding claims, **characterized in that** transducers (1) are positioned in a substantial symmetrical configuration, in such way that the transferred energy shows a homogeneous distribution on the processed food.

4. A kitchen appliance according to claims 1 or 2, **characterized in that** said kitchen appliance (3) is a stick mixer or hand blender, wherein said at least one ultrasound transducer (1) is disposed within the housing (5) of the appliance (3) in such way that the substantial amount of ultrasonic energy is transferred to the processed food.

5. A kitchen appliance according to claim 4, **characterized in that** said at least one transducer (1) is positioned on said rotating tool (4), preferably in the region closer to said clutch (6).

6. A kitchen appliance according to claims 4 or 5, **characterized in that** said kitchen appliance (1) further comprises a detachable mixing bowl (2), wherein said at least one transducer (1) is positioned within or adjacent to the mixing bowl (2).

7. A kitchen appliance according to claim 6, **characterized in that** said kitchen appliance (3) further comprises a bowl base (7) onto which said bowl (2) is to be mounted.

8. A kitchen appliance according to any of the previous claims, **characterized in that** the at least one ultrasound transducer (1) is connected to control means of the kitchen appliance, wherein the control means are adapted to control operation of said at least one ultrasound transducer (1).

9. A kitchen appliance according to any of the previous claims, **characterized in that** said transducers (1) all have substantially the same power and frequency output.

## Patentansprüche

1. Motorbetriebenes Küchengerät (3) zum Mischen, Kneten, Zerkleinern und/oder ähnlichen Verarbeiten von Lebensmittelzutaten, welches umfasst:
- einen Motor,
- eine Kupplung (6), die dazu eingerichtet ist, den Motor mit einem rotierenden Werkzeug (4) zu verbinden,
- ein rotierendes Werkzeug (4), das an der Kupplung (6) befestigt ist,
- wenigstens einen Ultraschallwandler (1), der dazu eingerichtet ist, Energie auf die Lebensmittelzutaten zu übertragen,
**dadurch gekennzeichnet, dass** das Küchengerät (3) eine Küchenmaschine oder ein Food Processor ist, wobei der wenigstens eine Ultraschallwandler (1) an dem rotierenden Werkzeug (4) angeordnet ist.

2. Küchengerät nach Anspruch 1, **dadurch gekennzeichnet, dass** der wenigstens eine Ultraschallwandler (1) ein Hochleistungswandler im Frequenzbereich von 16 bis 100 kHz, vorzugsweise von 25 bis 50 kHz ist.

3. Küchengerät nach einem der vorhergehenden Ansprüche, **dadurch gekennzeichnet, dass** Wandler (1) in einer im Wesentlichen symmetrischen Konfiguration auf eine solche Weise positioniert sind, dass die übertragene Energie eine homogene Verteilung auf die verarbeiteten Lebensmitteln aufweist.

4. Küchengerät nach Anspruch 1 oder 2, **dadurch gekennzeichnet, dass** das Küchengerät (3) ein Stabmischer oder Handmixer ist, wobei der wenigstens eine Ultraschallwandler (1) innerhalb des Gehäuses (5) des Geräts (3) auf eine solche Weise angeordnet ist, dass der Hauptteil der Ultraschallenergie auf die verarbeiteten Lebensmittel übertragen wird.

5. Küchengerät nach Anspruch 4, **dadurch gekennzeichnet, dass** der wenigstens eine Ultraschallwandler (1) an dem rotierenden Werkzeug (4) vorzugsweise in dem Bereich positioniert ist, der sich näher bei der Kupplung (6) befindet.

6. Küchengerät nach Anspruch 4 oder 5, **dadurch gekennzeichnet, dass** das Küchengerät (1) ferner eine lösbare Mischschüssel (2) umfasst, wobei der wenigstens eine Wandler (1) innerhalb der Mischschüssel (2) oder dieser benachbart positioniert ist.

7. Küchengerät nach Anspruch 6, **dadurch gekennzeichnet, dass** das Küchengerät (3) ferner einen Schüsseluntersatz (7) umfasst, auf welchem die Schüssel (2) anzubringen ist.

8. Küchengerät nach einem der vorhergehenden Ansprüche, **dadurch gekennzeichnet, dass** der wenigstens eine Ultraschallwandler (1) mit Steuerungsmitteln des Küchengeräts verbunden ist, wobei die Steuerungsmittel dazu eingerichtet sind, den Betrieb des wenigstens einen Ultraschallwandlers (1) zu steuern.

9. Küchengerät nach einem der vorhergehenden Ansprüche, **dadurch gekennzeichnet, dass** die Wandler (1) alle im Wesentlichen dieselbe Leistung und Ausgangsfrequenz aufweisen.

## Revendications

1. Appareil (3) de cuisine motorisé, pour mélange, malaxage, hachage et/ou traitement similaire d'ingrédients alimentaires, comprenant :
- un moteur,
- un embrayage (6) adapté à connecter le moteur à un outil rotatif (4), un outil rotatif (4) fixé à l'embrayage (6),
- au moins un transducteur ultrasonore (1) adapté à transférer une énergie aux ingrédients alimentaires
**caractérisé en ce que** ledit appareil (3) de cuisine est une machine de cuisine ou robot de cuisine, dans lequel ledit au moins un transducteur ultrasonore (1) est disposé sur l'outil rotatif (4).

2. Appareil de cuisine selon la revendication 1, **caractérisé en ce que** ledit au moins un transducteur ultrasonore (1) est un transducteur haute puissance dans la plage de fréquences de 16 à 100 kHz, préférablement 25 à 50 kHz.

3. Appareil de cuisine selon l'une quelconque des revendications précédentes, **caractérisé en ce que** des transducteurs (1) sont positionnés dans une configuration sensiblement symétrique, de telle sorte que l'énergie transférée montre une distribution homogène sur l'aliment traité.

4. Appareil de cuisine selon la revendication 1 ou 2, **caractérisé en ce que** ledit appareil (3) de cuisine est un mélangeur à pilon ou mélangeur à main, dans lequel ledit au moins un transducteur ultrasonore (1) est disposé à l'intérieur du logement (5) de l'appareil (3) de telle sorte que la quantité substantielle d'énergie ultrasonore est transférée à l'aliment traité.

5. Appareil de cuisine selon la revendication 4, **caractérisé en ce que** ledit au moins un transducteur (1) est positionné sur ledit outil rotatif (4), préférablement dans la région plus proche dudit embrayage (6).

6. Appareil de cuisine selon la revendication 4 ou 5, **caractérisé en ce que** ledit appareil (3) de cuisine comprend en outre un bol (2) de mélange détachable, dans lequel ledit au moins un transducteur (1) est positionné à l'intérieur du ou adjacent au bol (2) de mélange.

7. Appareil de cuisine selon la revendication 6, **caractérisé en ce que** ledit appareil (3) de cuisine comprend en outre une base (7) de bol sur laquelle ledit bol (2) est destiné à être monté.

8. Appareil de cuisine selon l'une quelconque des revendications précédentes, **caractérisé en ce que** ledit au moins un transducteur ultrasonore (1) est connecté à un moyen de commande de l'appareil de cuisine, dans lequel le moyen de commande est adapté à commander le fonctionnement dudit au moins un transducteur ultrasonore (1).

9. Appareil de cuisine selon l'une quelconque des revendications précédentes, **caractérisé en ce que** lesdits transducteurs (1) ont tous sensiblement la même sortie de puissance et de fréquence.
